# EUROPÄISCHE PATENTANMELDUNG

(11) **EP 1 283 467 A2**
(43) Veröffentlichungstag der Anmeldung: **12.02.2003**
(21) Anmeldenummer: 02015846.5
(22) Anmeldetag: 16.07.2002
(51) Int. Cl.: G06F 11/00

(54) **Überprüfung von Daten eines Systems mit einer programmgesteuerten Einheit**

(30) Priorität: 19.07.2001 DE 10135285
(71) Anmelder: Infineon Technologies AG, 81669 München (DE)
(72) Erfinder: Von Wendorff, Wilhard Christophorus, Dr., 81241 M-nchen (DE)
(74) Vertreter: Repkow, Ines, Dr. Dipl.-Ing.

(57) **Zusammenfassung**

Das beschriebene Verfahren ist ein Verfahren zum Betreiben eines Systems mit einer programmgesteuerten Einheit, welche in einer Speichereinrichtung gespeicherte, Befehle repräsentierende Daten ausliest und ausführt, wobei beim Auslesen von Daten aus der Speichereinrichtung überprüft wird, ob die betreffenden Daten fehlerfrei sind, und wobei dann, wenn festgestellt wird, daß die betreffenden Daten nicht fehlerfrei sind, die Ausführung einer Interrupt-Service-Routine veranlaßt wird. Es zeichnet sich dadurch aus, daß dann, wenn während der Ausführung der Interrupt-Service-Routine festgestellt wird, daß die hierzu aus der Speichereinrichtung auszulesenden Daten nicht fehlerfrei sind, die Ausführung der Interrupt-Service-Routine unterbrochen oder beendet wird, und die Ausführung einer an einer anderen Stelle gespeicherten Interrupt-Service-Routine veranlaßt wird. Die beschriebene Speichereinrichtung weist eine Fehlererkennungseinrichtung, welche ein Interrupt-Request-Signal ausgibt, wenn die gespeicherten Daten fehlerhaft sind, und welche ein anderes Interrupt-Request-Signal ausgibt, wenn sie während der Ausführung der Interrupt-Service-Routine abermals einen Fehler entdeckt.

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 13, d.h.
- ein Verfahren zum Betreiben eines Systems mit einer programmgesteuerten Einheit, welche in einer Speichereinrichtung gespeicherte, Befehle repräsentierende Daten ausliest und ausführt, wobei beim Auslesen von Daten aus der Speichereinrichtung überprüft wird, ob die betreffenden Daten fehlerfrei sind, und wobei dann, wenn festgestellt wird, daß die betreffenden Daten nicht fehlerfrei sind, die Ausführung des von der programmgesteuerten Einheit gerade ausgeführten Programms unterbrochen oder beendet wird, und die Ausführung einer Interrupt-Service-Routine veranlaßt wird, und
- eine Speichereinrichtung zum Speichern von Daten, mit einer Fehlererkennungseinrichtung, durch welche beim Auslesen von Daten aus der Speichereinrichtung überprüft wird, ob die betreffenden Daten fehlerfrei sind, und welche dann, wenn sie feststellt, daß die betreffenden Daten nicht fehlerfrei sind, ein Interrupt-Request-Signal ausgibt.

Daß in einer Speichereinrichtung gespeicherte Daten fehlerhaft sind, ist ein zwar relativ selten vorkommendes, aber nichtsdestotrotz sehr ernst zu nehmendes Problem. Dies gilt insbesondere für Systeme, deren Ausfall oder Fehlfunktion ein hohes Sicherheitsrisiko darstellt. Ein solches System ist beispielsweise ein Antiblockiersystem in einem Kraftfahrzeug. Eine Fehlfunktion oder ein Ausfall der Steuereinrichtung des Antiblockiersystems kann zur Folge haben, daß das Fahrzeug nicht mehr oder jedenfalls nicht mehr wie gewohnt bremsbar ist.

Aus diesem Grund werden in Systemen, welche sich unter keinen Umständen in einem undefinierten Zustand befinden dürfen, entsprechende Vorkehrungen gegen das Auftreten solcher Fehlfunktionen oder Ausfälle getroffen.

Diese Vorkehrungen können beispielsweise darin bestehen, daß überprüft wird, ob die aus einer Speichereinrichtung ausgelesenen Daten fehlerfrei sind, und daß dann, wenn festgestellt wird, daß dies nicht der Fall ist, eine im System enthaltene programmgesteuerte Einheit durch einen Interrupt Request zum Unterbrechen oder Beenden des gerade ausgeführten Programms und zum Ausführen einer Interrupt-Service-Routine veranlaßt wird.

Die Überprüfung, ob die aus der Speichereinrichtung ausgelesenen Daten fehlerfrei sind oder nicht, erfolgt unter Verwendung eines speziellen Codes, beispielsweise unter Verwendung eines sogenannten CRC (cyclic redundancy code) oder eines sogenannten ECC (error correction code), welcher zusammen mit den eigentlich zu speichernden Daten in der Speichereinrichtung, oder in einer anderen Speichereinrichtung gespeichert wird. Eine normalerweise in der Speichereinrichtung vorgesehene Fehlererkennungseinrichtung überprüft anhand dieses speziellen Codes, ob die aus der Speichereinrichtung auszugebenden Daten fehlerfrei sind, und zeigt durch die Ausgabe entsprechender Daten oder Signale (beispielsweise durch die Ausgabe eines Interrupt-Request-Signals) an, falls dies nicht der Fall ist.

Wenn durch die Fehlererkennungseinrichtung angezeigt wird, daß die in der Speichereinrichtung gespeicherten Daten fehlerhaft sind, reagiert die programmgesteuerte Einheit hierauf mit der Ausführung eines bestimmten Programmes (beispielsweise mit der Ausführung einer Interrupt-Service-Routine). In diesem bestimmten Programm werden Maßnahmen ergriffen, durch welche die von der programmgesteuerten Einheit zu steuernde Einrichtung in einen definierten Zustand gebracht wird.

Die Erfahrung zeigt, daß die zu steuernde Einrichtung auf diese Art und Weise nicht immer in einen definierten Zustand gebracht werden kann.

Der vorliegenden Erfindung liegt daher die Aufgabe zugrunde, eine Möglichkeit zu finden, durch welche im Fall, daß in einer Speichereinrichtung gespeicherte Daten fehlerhaft sind, das System mit größtmöglicher Wahrscheinlichkeit in einen definierten Zustand gebracht werden kann.

Diese Aufgabe wird erfindungsgemäß durch das in Patentanspruch 1 beanspruchte Verfahren und durch die in Patentanspruch 13 beanspruchte Vorrichtung gelöst.

Das erfindungsgemäße Verfahren zeichnet sich dadurch aus, daß dann, wenn während der Ausführung der Interrupt-Service-Routine festgestellt wird, daß die hierzu aus der Speichereinrichtung auszulesenden Daten nicht fehlerfrei sind, die Ausführung der Interrupt-Service-Routine unterbrochen oder beendet wird, und die Ausführung einer an einer anderen Stelle gespeicherten Interrupt-Service-Routine veranlaßt wird.

Die erfindungsgemäße Speichereinrichtung zeichnet sich dadurch aus, daß die Fehlererkennungseinrichtung dann, wenn sie während der Ausführung der auf die Ausgabe des Interrupt-Request-Signals hin ausgeführten Interrupt-Service-Routine feststellt, daß die hierzu aus der Speichereinrichtung ausgelesenen Daten nicht fehlerfrei sind, ein Interrupt-Request-Signal ausgibt, welches sich von dem zuvor ausgegebenen Interrupt-Request-Signal unterscheidet.

Dadurch besteht die Möglichkeit, aufeinanderfolgend mehrere verschiedene Versuche zu unternehmen, um das System ordnungsgemäß am Laufen zu halten oder in einen definierten Zustand zu bringen.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher beschrieben. Es zeigen
- Figur 1: den prinzipiellen Aufbau des im folgenden näher beschriebenen Systems, und
- Figur 2: eine Darstellung zur Veranschaulichung der Vorgehensweise im Fall, daß festgestellt wird, daß aus einer Speichereinrichtung angeforderte Daten fehlerhaft sind.

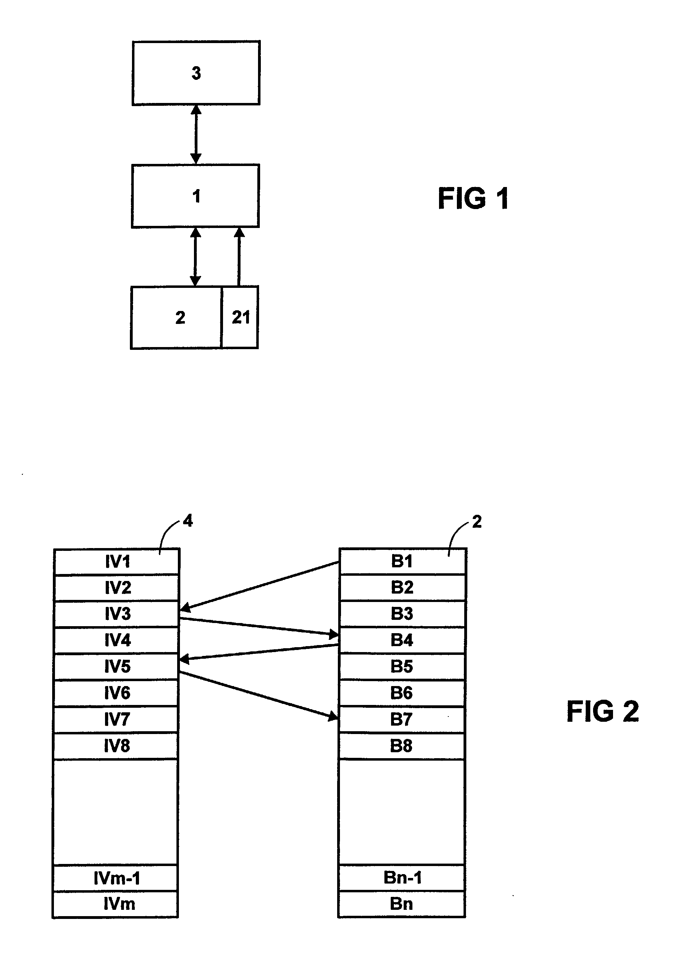

Gemäß Figur 1 umfaßt das vorliegend betrachtete System eine programmgesteuerte Einheit 1, eine Speichereinrichtung 2, und eine von der programmgesteuerten Einheit 1 gesteuerte Einrichtung 3.

Der Vollständigkeit halber sei bereits an dieser Stelle darauf hingewiesen, daß in der Figur 1 nur die vorliegend besonders interessierenden Bestandteile des betrachteten Systems gezeigt sind.

Die programmgesteuerte Einheit 1 ist im betrachteten Beispiel ein Mikrocontroller. Es könnte sich aber auch um eine andere programmgesteuerte Einheit, beispielsweise um einen Mikroprozessor oder einen Signalprozessor handeln.

Bei der durch den Mikrocontroller 1 gesteuerten Einrichtung 3 handelt es sich im betrachteten Beispiel um einen Airbag eines Kraftfahrzeuges. Es könnte sich aber auch um eine beliebige andere Einrichtung in einem Kraftfahrzeug handeln, beispielsweise um die Ventile eines Antiblockiersystems, oder um eine Einspritzpumpe. Die Einrichtung 3 und/oder das diese enthaltende System können selbstverständlich auch außerhalb von Kraftfahrzeugen vorgesehene Einrichtungen bzw. Systeme sein.

Die Speichereinrichtung 2 ist im betrachteten Beispiel außerhalb des Mikrocontrollers 1 vorgesehen. Sie kann aber auch Bestandteil des Mikrocontrollers 1 sein.

Die Speichereinrichtung 2 ist im betrachteten Beispiel ein Flash-Speicher, kann aber auch eine beliebige andere Speichereinrichtung sein, beispielsweise ein RAM, ein ROM, ein EEPROM, ein magnetischer Speicher, oder ein optischer Speicher. Die Speichereinrichtung 2 ist im betrachteten Beispiel ein Programmspeicher, in welchem die vom Mikrocontroller 1 auszuführenden Befehle gespeichert sind. Es könnte sich aber auch um einen Datenspeicher oder um einen kombinierten Programm- und Datenspeicher handeln.

Die in der Speichereinrichtung 2 gespeicherten Daten sind dort zusammen mit einem speziellen Code gespeichert, unter Verwendung dessen ermittelbar ist, ob die gespeicherten Daten die ursprünglich in die Speichereinrichtung eingeschriebenen Daten sind. Bei dem besagten Code handelt es sich im betrachteten Beispiel um den CRC (cyclic redundancy code) oder ECC (error correction code). Es können selbstverständlich auch andere Codes verwendet werden, durch welche sich Fehler erkennen oder beheben lassen.

Die Speichereinrichtung 2 enthält eine Fehlererkennungseinrichtung 21, welche unter Verwendung des speziellen Codes oder auf sonstige Art und Weise überprüft, ob die auszugebenden Daten fehlerfrei sind, und welche dann, wenn sie feststellt, daß dies nicht der Fall ist, einen Interrupt Request ausgibt, durch welchen der Mikrocontroller 1 dazu veranlaßt wird, die Ausführung des von diesem gerade ausgeführten Programms zu unterbrechen oder zu beendenden, und mit der Ausführung einer bestimmten Interrupt-Service-Routine zu beginnen.

Im normalen Betrieb liest der Mikrocontroller 1 aus der Speichereinrichtung 2 Befehle repräsentierende Daten und gegebenenfalls zur Befehlsausführung benötigte Operanden aus und führt sie aus. Die Fehlererkennungseinrichtung 21 überprüft, ob die aus der Speichereinrichtung 2 auszugebenden Daten fehlerfrei sind, und unternimmt nichts, wenn die betreffenden Daten fehlerfrei sind, bzw. gibt ein Interrupt-Request-Signal aus, wenn die Daten fehlerhaft sind.

Dem von der Fehlererkennungseinrichtung 21 ausgegebenen Interrupt-Request-Signal ist vorzugsweise die höchste Priorität zugeordnet, so daß der Mikrocontroller 1 die Ausführung des gerade ausgeführten Programmes sofort unterbricht und mit der Ausführung der dem Interrupt-Request-Signal zugeordneten Interrupt-Service-Routine beginnt.

Die Interrupt-Service-Routine ist im betrachteten Beispiel ebenfalls in der Speichereinrichtung 2 gespeichert, aber in einem anderen Bereich als das durch die Ausführung der Interrupt Service Routine unterbrochene oder beendete Programm. Unter anderer Bereich ist ein Bereich zu verstehen, der unabhängig von dem Speicherbereich, in welchem die fehlerhaften Daten gespeichert sind, löschbar und beschreibbar ist. Die Interrupt-Service-Routine könnte aber auch in einer anderen Speichereinrichtung als der Speichereinrichtung 2 gespeichert sein.

Dadurch bestehen realistische Chancen, daß die die Interrupt-Service-Routinen-Befehle repräsentierenden Daten fehlerfrei sind und die Interrupt-Service-Routine trotz des Umstandes, daß die in der Speichereinrichtung 2 gespeicherten Daten teilweise fehlerhaft sind, ordnungsgemäß ausgeführt werden können.

Bei der Ausführung der Interrupt-Service-Routine laufen die selben Vorgänge ab wie bei der Ausführung des durch deren Ausführung unterbrochenen oder beendeten Programmes. D.h., auch während der Ausführung der Interrupt-Service-Routine überprüft die Fehlererkennungseinrichtung 21, ob die auszugebenden Daten fehlerfrei sind, und gibt die Fehlererkennungseinrichtung 21 ein Interrupt-Request-Signal aus, wenn die Daten nicht fehlerfrei sind, wobei sich das ausgegebene Interrupt-Request-Signal jedoch von dem zuvor ausgegebenen Interrupt-Request-Signal unterscheidet. Dadurch wird der Mikrocontroller dazu veranlaßt, die Ausführung des gerade ausgeführten Programmes (der Interrupt-Service-Routine) zu unterbrechen oder zu beenden und mit der Ausführung einer weiteren Interrupt-Service-Routine zu beginnen, wobei diese Interrupt-Service-Routine in einem anderen Bereich der Speichereinrichtung 2 gespeichert ist als die dadurch unterbrochene oder beendete Interrupt-Service-Routine und das durch dies unterbrochene oder beendete Programm. Unter anderer Bereich ist ein Bereich zu verstehen, der unabhängig von den die zuvor unterbrochenen Programme speichernden Bereichen gelöscht und beschrieben werden kann. Die auszuführende Interrupt-Service-Routine könnte aber auch in einer anderen Speichereinrichtung gespeichert sein.

Bei der Ausführung dieser weiteren Interrupt-Service-Routine können die selben Vorgänge ablaufen wie bei der Ausführung der ersten Interrupt-Service-Routine: eine auf das Auftreten eines Fehlers hin ausgeführte dritte Interrupt-Service-Routine ist abermals in einem anderen Bereich der Speichereinrichtung 2 gespeichert.

Die vorstehend beschriebenen Vorgänge sind in Figur 2 veranschaulicht.

Die Figur 2 zeigt die Speichereinrichtung 2 und eine Interrupt-Vektor-Tabelle 4.

Die Speichereinrichtung 2 umfaßt n Bereich B1 bis Bn, welche jeweils unabhängig voneinander löschbar und beschreibbar sind. In der Interrupt-Vektor-Tabelle 4 sind m Interrupt-Vektoren IV1 bis IVm gespeichert, welche festlegen, welchem Interrupt Request welche Interrupt-Service-Routine zugeordnet sind.

Es sei angenommen, daß das im ungestörten Normalfall auszuführende Programm im Bereich B1 der Speichereinrichtung 2 gespeichert ist.

Wenn die Fehlererkennungseinrichtung 21 beim Auslesen von Daten (Befehlen) aus dem Bereich B1 feststellt, daß die Daten nicht fehlerfrei sind, gibt sie ein erstes Interrupt-Request-Signal aus.

Diesem ersten Interrupt-Request-Signal sei der Interrupt-Vektor IV3 zugeordnet, und dieser Interrupt-Vektor möge bestimmen, daß die zugeordnete Interrupt-Service-Routine im Bereich B4 der Speichereinrichtung 2 gespeichert ist.

Folglich führt die programmgesteuerte Einheit nach dem Auftreten eines Fehlers eine im Bereich B4 der Speichereinrichtung 2 gespeicherte Interrupt-Service-Routine aus.

Wenn die Fehlererkennungseinrichtung 21 beim Auslesen von Daten (Befehlen) aus dem Bereich B4 feststellt, daß die Daten nicht fehlerfrei sind, gibt sie ein zweites Interrupt-Request-Signal aus.

Diesem zweiten Interrupt-Request-Signal sei der Interrupt-Vektor IV5 zugeordnet, und dieser Interrupt-Vektor möge bestimmen, daß die zugeordnete Interrupt-Service-Routine im Bereich B7 der Speichereinrichtung 2 gespeichert ist.

Folglich führt die programmgesteuerte Einheit nach dem Auftreten eines Fehlers eine im Bereich B7 der Speichereinrichtung 2 gespeicherte Interrupt-Service-Routine aus.

Es kann auch vorgesehen werden, diese Interrupt-Service-Routine und danach ausgeführte Interrupt-Service-Routinen zu unterbrechen und in anderen Bereichen der Speichereinrichtung 2 gespeicherten Interrupt-Service-Routinen auszuführen.

Im betrachteten Beispiel gibt die Fehlererkennungseinrichtung verschiedene Interrupt-Request-Signale aus. D.h., das nach dem Auftreten des ersten Fehlers ausgegebene erste Interrupt-Request-Signal, das nach dem Auftreten des zweiten Fehlers ausgegebene zweite Interrupt-Request-Signal, und gegebenenfalls weitere, nach dem Auftreten weiterer Fehler ausgegebene Interrupt-Request-Signale unterscheiden sich voneinander. Den verschiedenen Interrupt-Request-Signalen sind verschiedene Interrupt-Vektoren zugeordnet, und den verschiedenen Interrupt-Vektoren sind verschiedene Interrupt-Service-Routinen zugeordnet. Im Ergebnis wird durch die verschiedenen Interrupt-Request-Signale die Ausführung von Interrupt-Service-Routinen veranlaßt, die in verschiedenen Bereichen der Speichereinrichtung 2 gespeichert sind.

Damit die Fehlererkennungseinrichtung 21 verschiedene Interrupt-Request-Signale, genauer gesagt zum richtigen Zeitpunkt das richtige Interrupt-Request-Signal ausgeben kann, muß sie bei der Ausgabe eines Interrupt-Request-Signals berücksichtigen, ob und gegebenenfalls wie viele Fehler bereits vorher aufgetreten sind. Dies kann beispielsweise dadurch geschehen, daß in der Fehlererkennungseinrichtung 21 die Anzahl der Fehler, genauer gesagt die Anzahl der zuvor ausgegebenen Interrupt-Request-Signale gezählt werden.

Eine mögliche Alternative hierzu besteht darin, daß die Fehlererkennungseinrichtung 21 immer das selbe Interrupt-Request-Signal ausgibt, und daß eine Zuordnungseinrichtung vorgesehen ist, die den Interrupt-Request-Signalen abhängig von der Anzahl der zuvor von der Fehlererkennungseinrichtung 21 ausgegebenen Interrupt-Request-Signale immer andere Interrupt-Vektoren zuordnet.

Die Interrupt-Service-Routinen beinhalten beispielsweise
- eine Kopie des gerade unterbrochenen oder beendeten Programms oder Programmteils, oder
- eine Routine, durch welche die Einrichtung 3 in einen definierten Zustand gebracht wird, oder
- eine Routine, durch welche die programmgesteuerte Einheit angehalten oder zurückgesetzt wird.

Im betrachteten Beispiel ist die auf das erste Interrupt-Request-Signal hin ausgeführte Interrupt-Service-Routine eine Kopie des gerade ausgeführten Programmes oder Programmteils, und ist die auf das zweite Interrupt-Request-Signal hin ausgeführte Interrupt-Service-Routine eine Routine, durch welche die zu steuernde Einrichtung in einen definierten (sicheren) Zustand gebracht wird.

Es wäre aber auch denkbar, daß bereits die auf das erste Interrupt-Request-Signal hin ausgeführte Interrupt-Service-Routine eine Routine ist, durch welche die zu steuernde Einrichtung in einen definierten (sicheren) Zustand gebracht wird, und daß die auf das zweite Interrupt-Request-Signal hin ausgeführte Interrupt-Service-Routine eine Kopie der auf das erste Interrupt-Request-Signal hin ausgeführten Interrupt-Service-Routine ist.

Es dürfte sich als vorteilhaft erweisen, wenn nach einer bestimmten Anzahl von Fehlern, insbesondere wenn auch eine oder mehrere Interrupt-Service-Routinen fehlerhaft sind, durch welche die zu steuernde Einrichtung in einen definierten (sicheren) Zustand gebracht werden soll, ein Signal, beispielsweise einen Non Maskable Interrupt oder einen Non Maskable Reset generiert, durch welches bzw. welchen der Mikrocontroller 1 angehalten oder zurückgesetzt wird.

Es dürfte einleuchten und bedarf keiner näheren Erläuterung, daß die Inhalte der Interrupt-Service-Routinen auch beliebig anders als in den vorstehend erwähnten Beispielen gewählt sein können. Welche der vorhandenen Möglichkeiten die beste ist, hängt vom jeweiligen Einzelfall ab. Wichtig ist in erster Linie, daß das Programm, das nach dem Auftreten eines Fehlers ausgeführt wird, in einem Bereich der Speichereinrichtung 2 gespeichert ist, der unabhängig von dem das fehlerhafte Programm speichernden Bereich löschbar und beschreibbar ist. Dadurch besteht eine sehr große Wahrscheinlichkeit, daß Programme, die auf das Auftreten einer Fehlers hin ausgeführt werden, ordnungsgemäß ausgeführt werden.

Wenn die nach dem Auftreten eines Fehlers ausgeführte Interrupt-Service-Routine eine Kopie der gerade unterbrochenen Programms oder Programmteils ist, und wenn es der Aufbau des Programms und die zu steuernde Einrichtung 3 gestatten, daß das unterbrochene Programm oder der unterbrochene Programmteil unterbrochen und anschließend erneut ausgeführt wird, besteht sogar eine große Wahrscheinlichkeit, daß die Steuerung der zu steuernden Einrichtung ordnungsgemäß fortgesetzt werden kann.

In den vorstehenden Ausführungen war stets die Rede davon, daß die Fehlererkennungseinrichtung dann, wenn sie einen Fehler erkennt, ein Interrupt-Request-Signal ausgibt. Der Vollständigkeit halber sei darauf hingewiesen, daß es vom jeweiligen Einzelfall abhängt, was als Fehler angesehen wird. Anlaß für die Ausgabe eines Interrupt-Request-Signals kann sowohl ein nicht korrigierbarer als auch ein korrigierbarer Fehler sein.

Auf die beschriebene Art und Weise ist es unabhängig von den Einzelheiten der praktischen Realisierung mit größter Wahrscheinlichkeit möglich, Systeme beim Auftreten von Speicherfehlern normal weiterzubetreiben oder in einen definierten Zustand zu bringen.

### Bezugszeichenliste

- 1: Mikrocontroller
- 2: Speichereinrichtung
- 3: durch 1 zu steuernde Einrichtung
- 4: Interrupt-Vektor-Tabelle
- 21: Fehlererkennungseinrichtung

- Bx: Bereiche von 2
- Ivx: Interrupt-Vektoren

## Patentansprüche

1. Verfahren zum Betreiben eines Systems mit einer programmgesteuerten Einheit (1), welche in einer Speichereinrichtung (2) gespeicherte, Befehle repräsentierende Daten ausliest und ausführt, wobei beim Auslesen von Daten aus der Speichereinrichtung überprüft wird, ob die betreffenden Daten fehlerfrei sind, und wobei dann, wenn festgestellt wird, daß die betreffenden Daten nicht fehlerfrei sind, die Ausführung des von der programmgesteuerten Einheit gerade ausgeführten Programms unterbrochen oder beendet wird, und die Ausführung einer Interrupt-Service-Routine veranlaßt wird,
**dadurch gekennzeichnet,**
**daß** dann, wenn während der Ausführung der Interrupt-Service-Routine festgestellt wird, daß die hierzu aus der Speichereinrichtung auszulesenden Daten nicht fehlerfrei sind, die Ausführung der Interrupt-Service-Routine unterbrochen oder beendet wird, und die Ausführung einer an einer anderen Stelle gespeicherten Interrupt-Service-Routine veranlaßt wird.

2. Verfahren nach Anspruch 1,
**dadurch gekennzeichnet,**
**daß** die erste Interrupt-Service-Routine in einem Bereich der Speichereinrichtung (2) gespeichert ist, der unabhängig von dem das unterbrochene oder beendete Programm speichernden Bereich der Speichereinrichtung löschbar und beschreibbar ist.

3. Verfahren nach Anspruch 1 oder 2,
**dadurch gekennzeichnet,**
**daß** die zweite Interrupt-Service-Routine in einem Bereich der Speichereinrichtung (2) gespeichert ist, der unabhängig von dem die erste Interrupt-Service-Routine speichernden Bereich der Speichereinrichtung löschbar und beschreibbar ist.

4. Verfahren nach Anspruch 3,
**dadurch gekennzeichnet,**
**daß** die zweite Interrupt-Service-Routine in einem Bereich der Speichereinrichtung (2) gespeichert ist, der unabhängig von dem Bereich löschbar und beschreibbar ist, in welchem das vor der ersten Interrupt-Service-Routine ausgeführte Programm gespeichert ist.

5. Verfahren nach einem der vorhergehenden Ansprüche,
**dadurch gekennzeichnet,**
**daß** die Feststellung, ob aus der Speichereinrichtung (2) ausgelesene Daten Fehlerfrei sind oder nicht, durch eine Fehlererkennungseinrichtung (21) erfolgt.

6. Verfahren nach Anspruch 5,
**dadurch gekennzeichnet,**
**daß** die Fehlererkennungseinrichtung (21) Bestandteil der Speichereinrichtung (2) ist.

7. Verfahren nach Anspruch 5 oder 6,
**dadurch gekennzeichnet,**
**daß** die Fehlererkennungseinrichtung (21) dann, wenn sie feststellt, daß die aus der Speichereinrichtung (2) ausgelesenen Daten nicht fehlerfrei sind, ein Interrupt-Request-Signal ausgibt.

8. Verfahren nach Anspruch 7,
**dadurch gekennzeichnet,**
**daß** die Fehlererkennungseinrichtung (21) dann, wenn sie während der Ausführung einer Interrupt-Service-Routine feststellt, daß die aus der Speichereinrichtung (2) ausgelesenen Daten nicht fehlerfrei sind, ein sich von den zuvor ausgegebenen Interrupt-Request-Signalen unterscheidendes Interrupt-Request-Signal ausgibt.

9. Verfahren nach Anspruch 7,
**dadurch gekennzeichnet,**
**daß** aufeinanderfolgend von der Fehlererkennungseinrichtung (21) ausgegebene Interrupt-Request-Signalen verschiedenen Interrupt-Vektoren zugeordnet werden.

10. Verfahren nach Anspruch 9,
**dadurch gekennzeichnet,**
**daß** es von dem zu unterbrechenden oder zu beendenden Programm abhängig gemacht wird, welcher Interrupt-Vektor einem von der Fehlererkennungseinrichtung (21) ausgegebenen Interrupt-Request-Signal zugeordnet wird.

11. Verfahren nach einem der vorhergehenden Ansprüche,
**dadurch gekennzeichnet,**
**daß** die nach dem Auftreten eines Fehlers ausgeführte Interrupt-Service-Routine ein Programm ist, das zumindest teilweise mit dem durch die Interrupt-Service-Routine unterbrochenen oder beendeten Programm übereinstimmt.

12. Verfahren nach einem der Ansprüche 1 bis 10,
**dadurch gekennzeichnet,**
**daß** die nach dem Auftreten eines Fehlers ausgeführte Interrupt-Service-Routine ein Programm ist, das zumindest teilweise dem durch die Interrupt-Service-Routine unterbrochenen oder beendeten Programm entspricht.

13. Speichereinrichtung (2) zum Speichern von Daten, mit einer Fehlererkennungseinrichtung (21), durch welche beim Auslesen von Daten aus der Speichereinrichtung überprüft wird, ob die betreffenden Daten fehlerfrei sind, und welche dann, wenn sie feststellt, daß die betreffenden Daten nicht fehlerfrei sind, ein Interrupt-Request-Signal ausgibt,
**dadurch gekennzeichnet,**
**daß** die Fehlererkennungseinrichtung dann, wenn sie während der Ausführung der auf die Ausgabe des Interrupt-Request-Signals hin ausgeführten Interrupt-Service-Routine feststellt, daß die hierzu aus der Speichereinrichtung ausgelesenen Daten nicht fehlerfrei sind, ein Interrupt-Request-Signal ausgibt, welches sich von dem zuvor ausgegebenen Interrupt-Request-Signal unterscheidet.
